# EUROPÄISCHE PATENTSCHRIFT

(11) **EP 1 342 596 B1**
(45) Veröffentlichungstag und Bekanntmachung des Hinweises auf die Patenterteilung: **19.12.2007**
(21) Anmeldenummer: 03001841.0
(22) Anmeldetag: 29.01.2003
(51) Int. Cl.: B60G 17/052, B60G 17/015

(54) **Leckageerkennung in luftgefederten Niveauregeleinrichtung**
Air leakage detection in a height control device using pneumatic springs
Détection des fuites d'air dans un dispositif de réglage du niveau à ressorts pneumatiques

(30) Priorität: 08.03.2002 DE 10210371; 11.01.2003 DE 10300737
(43) Veröffentlichungstag der Anmeldung: 10.09.2003
(73) Patentinhaber: Continental Aktiengesellschaft, 30165 Hannover (DE)
(72) Erfinder: Stiller, Alexander Dr., 30823 Garbsen (DE)

(56) Entgegenhaltungen:
- EP-A- 0 397 181
- WO-A-02/14825
- DE-A1- 4 003 781
- GB-A- 2 344 323
- US-A- 6 089 831
- US-B1- 6 173 974
- PATENT ABSTRACTS OF JAPAN Bd. 017, Nr. 598 (M-1504), 2. November 1993 (1993-11-02) -& JP 05 178056 A (TOYOTA MOTOR CORP), 20. Juli 1993 (1993-07-20)
- PATENT ABSTRACTS OF JAPAN Bd. 007, Nr. 215 (M-244), 22. September 1983 (1983-09-22) -& JP 58 110316 A (TOYOTA JIDOSHA KOGYO KK), 30. Juni 1983 (1983-06-30)

## Beschreibung

### Stand der Technik

Die Erfindung geht aus von einer Kraftfahrzeug-Luftfederanordnung mit Niveauregeleinrichtung nach der Gattung des Hauptanspruchs.
Luftfederanordnungen mit Niveauregeleinrichtung sind in den verschiedensten Ausführungsformen bekannt.
Aus der DE4003781A1 ist eine Einrichtung zur Niveauregelung für ein Fahrzeug mit Luftfederung bekannt, wobei die Höhensignale der Höhensensoren mit einer Zeitkonstante gefiltert werden, um das Regelungsverhalten der Einrichtung zu verbessern. Eine Höhenänderung wird=entweder durch eine Laständerung hervorgerufen oder durch ein Leck in einer Luftfeder verursacht.
Bei den Regelungsvorgängen wird üblicherweise nicht unterschieden, ob eine Regelungsanforderung aufgrund eines geänderten Beladungszustands oder aufgrund einer Leckage erfolgt.

### Aufgabe und Lösung der Erfindung

Es sollen insbesondere mittelgroße Leckagen in einer Kraftfahrzeug-Luftfederanordnung erkannt werden, d. h. bei Aufregelung kann z. B. das Sollniveau noch erreicht werden.

Kernstück der erfindungsgemäßen Vorrichtung ist eine Funktionslogik zur Erkennung von Leckage in der niveaugesteuerten Luftfederanordnung. Diese Funktionslogik ist Teil der Niveauregeleinrichtung. Die Funktionsweise dieser Logik basiert auf einer getrennten Behandlung der Niveausteuerung in unterschiedlichen Fahrzuständen.

### Die Funktionslogik funktioniert folgendermaßen:

A: Zündung wird ausgeschaltet. In diesem Zustand schaltet sich das Niveausteuergerät nach einer "Nachlaufzeit" von z. B. fünf Minuten aus. Anschließend "erwacht" das Steuergerät (SG) zeitgesteuert, z. B. nach zwei Stunden und dann z. B. nach fünf Stunden wieder, um die Regelabweichung zu bewerten. Wird erkannt, dass das Fahrzeug an mindestens einer Fahrzeugecke zu tief steht (Unterer Schwellwert Höhenniveau erreicht oder unterschritten), wird das Fahrzeug an allen Fahrzeugecken auf des Sollniveau innerhalb der Toleranzgrenzen bzw. Schwellwerte geregelt; anschließend schaltet das Steuergerät in den Sleep-Modus.

B: Zündung des Fahrzeugs ist angeschaltet. Es erfolgt permanent eine Niveauüberwachung vom Steuergerät (SG). Bei Überschreiten der Toleranzgrenzen, z.B. unterschreiten des Schwellwertes h_{Su}, wird das Fahrzeug wieder auf das Sollniveau geregelt.

Zu (A): Erfindungsgemäße Erkennungslogik zum Erkennen von Leckagen in den Luftfederbälgen, im Steuergerät-Nachlauf:

Wenn die Zündung ausgeschaltet wird (KL15-Aus) und nach dem Ablauf einer festgelegten Zeitspanne (z. B. 5 min), geht das Steuergerät in den Sleep-Modus (Stromsparmodus). Bevor das Steuergerät in den "Sleep-Modus" geht, wird mit dem erfindungsgemäßen Verfahren zum Zeitpunkt t₁ der Luftdruck p₁ für jeden Balg (VL, VR, HL, HR) und der Abstand h₁ (VL, VR, HL, HR) in den Luftfederbälgen radweise gemessen und zusammen mit t₁ abgespeichert. Bei einem erneuten Aufwachen des Steuergerätes (Verlassen des Stromsparmodus) werden erst bei erkanntem Auf-Regelbedarf zum Zeitpunkt t₂, d.h. unterer Schwellwert h_{Su} unterschritten, die Luftdrücke p₂ (VL, VR, HL, HR) in den Luftfederbälgen gemessen.

Es ist bei bestimmen Schaltungsanordnungen besonders vorteilhaft die Luftdrücke p₂ nur dann zu ermitteln, wenn der untere Schwellwert h_{Su} des Höhenniveaus an mindestens einer Fahrzeugecke unterschritten wurde. Bei diesen Schaltungsanordnungen kann bei jeder Druckmessung in einem Luftfederbalg ein Luftaustausch mit den entsprechenden Leitungen und gegebenenfalls mit dem angeschlossenen Lufttrockner stattfinden, sofern ein Druckgefälle zwischen dem Druck im Luftfederbalg und den bei der Druckmessung angeschlossenen Bauteilen besteht. Das Volumen eines Lufttrockner beträgt normalerweise ca. 200-300 cm³. Weist der Lufttrockner beispielsweise eine Druck nahe am Atmosphärendruck auf, dann ist bei einem Luftaustausch und einem Druckausgleich mit einem angeschlossenen Luftfederbalg ein Absinken des Höhenniveaus an der Fahrzeugecke dieses Luftfederbalges möglich. In einem ungünstigen Fall könnte bei der Ermittlung der Leckage in der Reihenfolge erst Druckmessung und dann Ermittlung des Höhenniveaus, aufgrund des oben beschriebenen Luftaustausches und Druckausgleiches mit den angeschlossenen Leitungen und Bauteilen, ein Absinken einer Fahrzeugecke stattfinden und zu einer Erkennung auf Leckage führen. Dies wird bei der Ermittlung der Leckage in umgekehrter Reihenfolge, erst Ermittlung des Höhenniveaus und dann -wenn notwendig- Druckmessung, sicher vermieden, wodurch Druckluft und Energie eingespart wird.

Auswertung der Bedingung, wobei zur Bewertung diejenige Luftfeder herangezogen wird, an deren Achse ein Regelbedarf erkannt wurde, und diejenige Luftfeder ausgewählt wird, die "am tiefsten steht", also den kleinsten Wert von h₂ aufweist:
Sind die Bedingungen für die so ausgewählte Luftfeder
Bed.1: (p₁ - p₂) > K₁ mit K₁ ≥ 0 (Radlast nicht größer geworden, z.B. K₁ = 0 bar) und
Bed.2: {h(t₁) - h(t₂)} * K₃/(t₂- t₁) > K₂ mit K₂ > 0 und K₃ > 0 (Höhenniveau an der entspr. Luftfeder ist geringer geworden, z.B. K₂=1/s und K₃=10/mm) und
Bed.3: (t₂-t₁) < T_{Grenz} (Zeitbedingung in der eine Leckage erkannt werden kann) erfüllt,
wird auf Leckage an dieser entsprechenden Luftfeder erkannt und ein radspezifischer Zähler Zᵣ inkrementiert. Wird hingegen zu t₂ kein Regelbedarf erkannt, d.h. Schwellwert hₛᵤ der entsprechenden Luftfeder nicht unterschritten, werden die entsprechenden radspezifischen Zähler Zᵣ (VL, VR, HL, HR) dekrementiert, vorzugsweise minimal bis auf den Wert Null.

Mit T_{Grenz} kann vorgegeben werden, wie groß die Leckage sein muss, damit diese noch erkannt wird. Je größer T_{Grenz} ist, desto geringere Leckagewerte werden noch erkannt, je kleiner T_{Grenz} ist, desto größer muss die Leckage sein, um über die Bedingungen noch erkannt zu werden.

Überschreitet ein radspezifischer Zähler Zᵣ einen Schwellwert K₄, z. B. den Wert 4, wird auf Leckagefehler erkannt. Ein Leckagefehler wird im Inneren des Fahrzeugs optisch und/oder akustisch angezeigt, wobei der jeweilige Leckagefehler radspezifisch und/oder als Fehler für die gesamte Luftfederanordnung angezeigt werden kann. Ein Leckagefehler wird vorzugsweise im Steuergerät in einem Permanentspeicher hinterlegt, um diesen Fehler für spätere Analyse- und Reparaturzwecke zur Verfügung zu stellen.

Bei mehrmaligen Aufwachvorgängen wird das Verfahren entsprechend wiederholt, indem die Werte zum aktuellen Zeitpunkt dem Zeitpunkt t₂ wieder zugeordnet werden und dem vergangenen Zeitpunkt dem Zeitpunkt t₁. D.h. als neuer Zeitpunkt t₁ wird der letzte Zeitpunkt t₂ gewählt, an dem das Steuergerät von dem aktiven Zustand in den Sleep-Modus versetzt worden ist, wobei der neue Zeitpunkt t₂ zeitgesteuert nach einer vorgegebenen Zeitspanne, z.B. drei Stunden, gewählt wird, wenn das Steuergerät erneut aus dem Sleep-modus in den aktiven Zustand versetzt wird.

### Variationen:

Der Zeitpunkt t₁ muss nicht unbedingt beim ersten Übergang des Steuergerätes nach dem Ausschalten der Zündung (KL15=Aus) in den Sleep-Modus festgelegt werden, sondern kann auch beim z. B. ersten Erwachen des Steuergerätes (Verlassen des Sleep-Modus) und dem Erkennen eines Regelbedarfs, d.h. Schwellwert h_{Su} mindestens einer Luftfeder unterschritten, gelegt werden. Der Zeitpunkt t₂ verschiebt sich dann auf das nächste Aufwachen des Steuergerätes. Grund: eine gesondert angestoßene Druckmessung verursacht störende Geräusche. Zu Beginn eines jeden Regelvorganges wird hingegen sowieso eine Druckmessung durchgeführt. Mit dieser Variante sind also keine zusätzlichen Druckmessungen (Ventilschaltungen) notwendig. Außerdem können dadurch Effekte aufgrund der Abkühlung der Luftfedern ausgeschlossen werden, indem t₁ so gewählt wird, dass die Luftfeder abgekühlt ist.

Zu (B): Erfindungsgemäße Erkennungslogik, zum Erkennen von Leckagen in den Luftfederbälgen, bei eingeschalteter Zündung:

Vorraussetzung für die Aktivierung der nachfolgenden Logik ist, dass ein Aufregelvorgang bei eingeschalteter Zündung (KL15=An) ausgelöst wurde, der nicht aufgrund einer Veränderung des Sollniveaus ausgelöst wurde (Manuelle Niveauverstellung). Hat ein solcher Regelvorgang zum Zeitpunkt t₁ stattgefunden, werden zu Beginn des Regelvorgangs bzw. bei Erkennung eines unterschrittenen Schwellwertes h_{Su} die Luftdrücke p₁ in den Luftfederbälgen und der Zeitpunkt t₁ abgespeichert. Der Zeitpunkt t₂ bezeichnet den Zeitpunkt, wann der nächste Regelbedarf erkannt wird, d.h. Schwellwert h_{Su} unterschritten, und ein Aufregelvorgang ausgelöst wird. Zu diesem Zeitpunkt t₂, vor Beginn der Aufregelung, werden die Drücke p₂ gemessen. Wenn die Bed. 1 und die Bed.3 erfüllt sind, wird der entsprechende radindividuelle Zähler inkrementiert.
Zur Bewertung der Leckage wird nach dem erfindungsgemäßen Verfahren diejenige Luftfeder herangezogen, an deren Achse ein "Aufregelbedarf" erkannt wurde und diejenige Luftfeder ausgewählt, bei der der Fahrzeugaufbau _{"} am tiefsten steht", also den kleinsten Wert von h₂ aufweist.

Die radindividuellen Zähler werden zeitgesteuert mit einem Wert größer als Δt = t₂- t₁, z.B. jede Stunde (also Δt = 1h) oder Δt = 2*(t₂-t₁), oder bei nicht Erkennung einer Leckage an der entsprechenden Luftfeder dekrementiert, wenn in diesem Zeitraum oder bei der Leckage-Erkennung die Ventile zu den entsprechenden Luftfeder nicht betätigt wurden. Vorzugsweise werden die radspezifischen Zähler minimal bis auf den Wert Null dekrementiert.

Überschreitet ein radindividueller Zähler einen Schwellwert K₄, wird auf Leckagefehler erkannt, welcher der dazugehörigen Luftfeder zugeordnet wird.

Erfindungsgemäß erfolgt die Überwachung nur bei Druckänderungen, um Niveauänderungen aufgrund von Beladungsänderungen auszuschließen. Um Temperatur bedingte Einflüsse auszuschalten, ist die Zeitspanne zwischen t₂ und t₁ so zu wählen, dass dadurch bedingte Höhenänderung noch zu keinem Überschreiten der Regelhysterese, d.h der oberen und der unteren Schwellwerte h_{So} und h_{Su} führt.

### Vorteile der Erfindung

Das erfindungsgemäße Verfahren mit den Merkmalen des Anspruchs 1 hat - in Verbindung mit der entsprechenden Vorrichtung - gegenüber Luftfederanordnungen, die mit einer herkömmlich funktionierenden Niveauregeleinrichtung versehen sind, den Vorteil, dass erstmals Luftfeder-Leckagen erkannt werden können. Dabei wird lediglich jeweils ein Höhensensor in den einzelnen Luftfederbälgen und ein Drucksensor vorausgesetzt.
Als weiterer Vorteil ist anzusehen, dass nicht nur die grundsätzliche Erkennung einer Leckage in der Anordnung möglich ist, sondern dass darüber hinaus auch eine Lokalisierung der Leckage vorgenommen werden kann, z. B. Luftfeder vorne links (VL), usw..
Vorteilhaft ist weiterhin, dass bei Erkennung auf Leckage an einer Luftfeder ein radspezifischer Zähler inkrementiert wird. Damit ist es möglich, den zeitlichen Verlauf der radspezifischen Leckage zu überwachen.
Als weiterer Vorteil ist anzusehen, dass erst nach dem Überschreiten eines Schwellwertes auf einen Leckagefehler an einer Luftfeder erkannt wird. Damit wird eine fehlerhafte Erkennung auf Leckage aufgrund von Höhensignalschwankungen hervorgerufen durch beispielsweise Beladungsänderungen, Schwingungsanregungen während der Fahrt oder Temperaturschwankungen weitestgehend vermieden.
Ein weiterer Vorteil der Erfindung ist, dass die Druckmessung erst nach der Bewertung der Höhensignale vorgenommen wird, wobei bei an mindestens einer Fahrzeugecke der untere Höhen-Schwellwert unterschritten sein muss. Hierdurch wird Druckluft und Energie eingespart.

Schließlich kann ein Hinweis auf eine Leckage und/oder einen Leckagefehler in einem permanenten Fehlerspeicher des Steuergerätes zwecks Information der Werkstatt (Werkstattdiagnose) hinterlegt werden.
Vorteilhaft ist die akustische oder visuelle Anzeige der Leckage im Fahrzeuginneren für den Fahrzeugführer. Der Fahrzeugführer wird unmittelbar auf den Zustand der Niveauregelanlage hingewiesen und kann entsprechende sicherheitsrelevante Schritte wie zum Beispiel verlangsamte Fahrt durchführen.

### Zeichnungen

Aufbau und Funktionsweise der erfindungsgemäßen Vorrichtung soll anhand der beigefügten Prinzipzeichnungen und der Diagramme erläutert werden. Es zeigt:
Fig. 1 die Prinzipdarstellung einer Kraftfahrzeug-Luftfederanordnung;
Fig. 2 ein Blockschaltbild _{"}Signalerfassung zur Steuerung und Regelung einer pneumatischen Niveauverstelleinheit";
Fig. 3a Höhensignal-, Druck- und SG-Zustands-Zeitdiagramm;
Fig. 3b Höhensignal-, Druck- und SG-Zustands-Zeitdiagramm;
Fig. 4 Nachlaufphasen des Steuergerätes nach Abschalten der Zündung (KL15);

### Beschreibung der Erfindung

Ein (nicht dargestelltes) Kraftfahrzeug weist eine Luftfederanordnung mit Niveausteuerung auf.

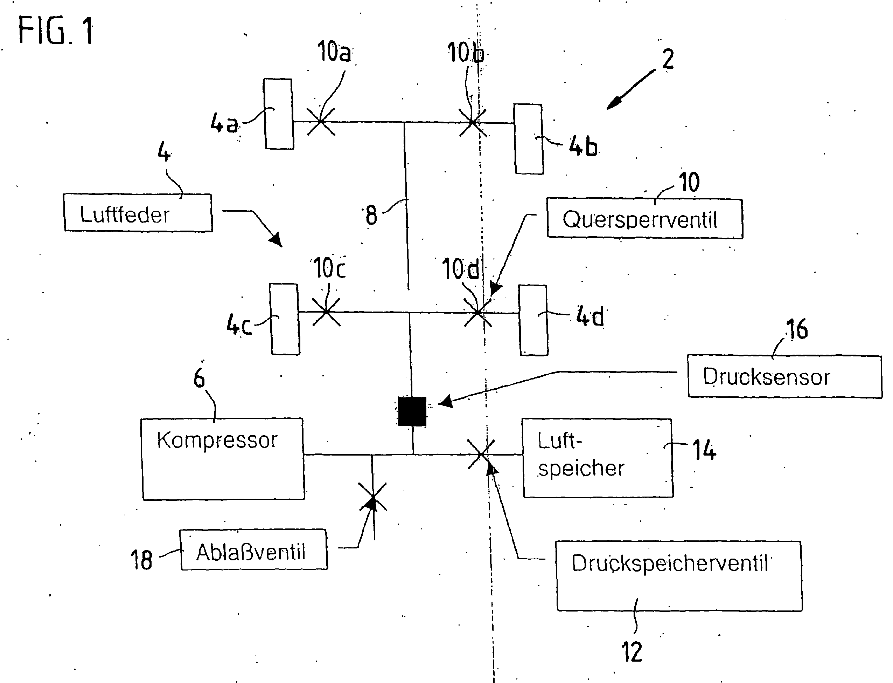

Die in Fig. 1 schematisch dargestellte Luftfederanordnung 2 besteht aus vier Luftfedern 4a, 4b, 4c, 4d, die den vier Fahrzeugrädern zur Abstützung des Chassis zugeordnet sind. Die Luftfedern 4a, 4b, 4c, 4d werden von einem gemeinsamen Kompressor 6 (Kompressorrelais 20) über Druckleitungen 8 mit Druckluft versorgt. Die einzelnen Luftfedern 4a, ... sind jeweils mit Hilfe von Quersperrventilen 10a, 10b, 10c, 10d absperrbar. Vervollständigt wird die Luftfederanordnung 2 durch einen mittels Druckspeicherventil 12 absperrbaren Luftspeicher (Druckspeicher) 14, einen Drucksensor 16 und ein Ablassventil 18. Die einzelnen Luftfedern 4a, ... weisen Höhensensoren 22a, 22b, 22c, 22d auf, deren Signale von einer (nicht dargestellten) Niveauregeleinrichtung ausgewertet werden.

Aufbau und Wirkungsweise einer Niveauregeleinrichtung werden als bekannt vorausgesetzt.

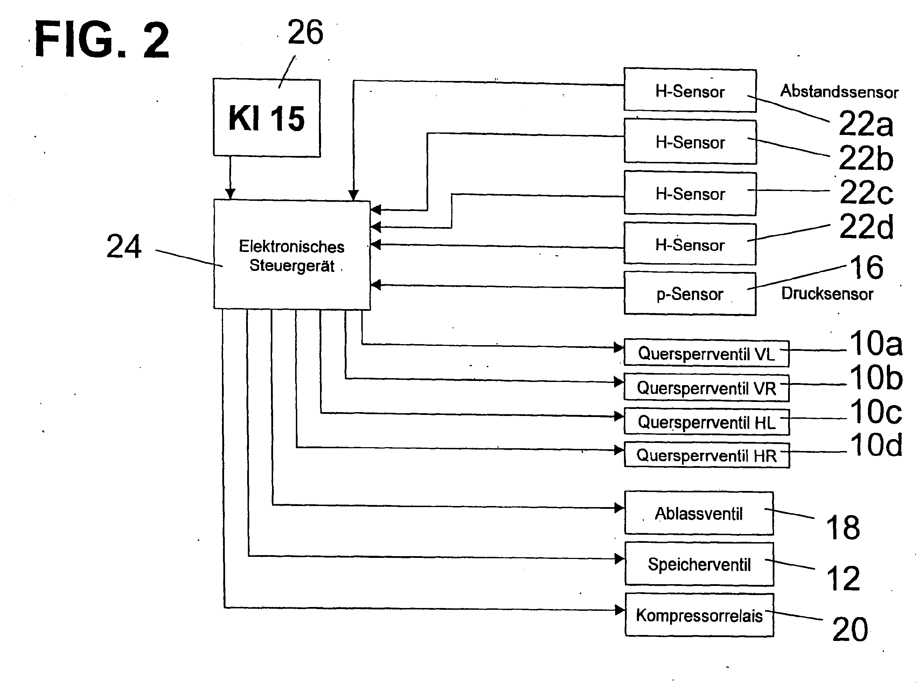

Bezüglich der Signalerfassung und der Verknüpfung mit den zu steuernden Ventilen wird auf Fig. 2 verwiesen:
Die von den vier Höhensensoren 22a, 22b, 22c, 22d und dem Drucksensor 16 sensierten Signale werden einem an die Zündung _{"}KL15" 26 angeschlossenen elektronischen Steuergerät 24 zugeführt und dort zwecks Steuerung der Ventile 10a, 10b, 10c, 10d, 12, 18 und eines Kompressor-Relais 20 verarbeitet.

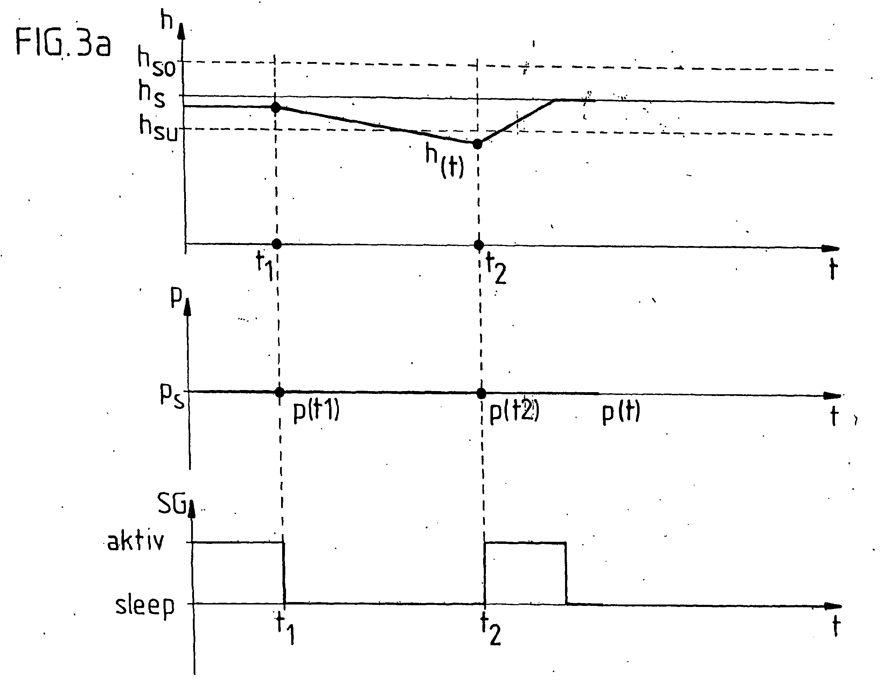

Die Figur 3a zeigt den zeitlichen Verlauf des Höhensignals h und des Luftdrucks p einer Luftfeder sowie den zeitlichen Verlauf der Zustands des Steuergerätes (SG). Die Sollniveauhöhe h_{S} der Luftfeder wird von dem oberen Schwellwert h_{So} und dem unteren Schwellwert h_{Su} begrenzt. Der zeitliche Verlauf der tatsächlichen Istniveauhöhe der Luftfeder wird in Form der dickeren Linie h(t) dargestellt. Zum Zeitpunkt t₁ liegt die Istniveauhöhe h₁ zwischen der Sollniveauhöhe h_{S} und dem unteren Schwellwert h_{Su}. Der Druck p(t₁) zum Zeitpunkt t₁ wird in dem mittleren p-t-Diagramm dargestellt. In dem gezeigten Ausführungsbeispiel entspricht der Druck p(t₁) genau dem Solldruck ps. Es sind keine Druckschwellwerte dargestellt, welche selbstverständlich vorhanden sein können, so dass auch geringe Druckunterschiede zwischen den Zeitpunkten t₁ und t₂ keine Laständerung an dem Fahrzeug oder der Luftfeder bedeuten. Der Zustand des Steuergerätes (SG) wird im unteren SG-t-Diagramm dargestellt. Zum Zeitpunkt t₁ wechselt der Zustand des Steuergerätes (SG) von aktiv auf sleep.

Nach einer vorgegebenen Zeitspanne Δt = t₂-t₁ wird das Steuergerät (SG) automatisch von dem sleep-Modus (sleep) in den aktiven Zustand (aktiv) versetzt. Es wird die Ist-Niveauhöhe h₂(t₂) zum Zeitpunkt t₂ ermittelt. Die Istniveauhöhe h₂ (h(t₂)) liegt zum Zeitpunkt t₂ unterhalb des Schwellwertes h_{Su}. Damit ist die Bedingung {h (t₁) - h (t₂)} * K₃/(t₂- t₁) > K₂ für eine Höhenniveauänderung vom Zeitpunkt t₁ zum Zeitpunkt t₂ erfüllt. K₂ und K₃ sind frei wählbare konstanten und hängen von den Fahrzeugeigenschaften ab.

Da der Schwellwert K₂ überschritten worden ist, wird der Ist-Druck p(t₂), welcher in diesem Fall dem Solldruck p_{S} entspricht, ermittelt. Die weitere Bedingung für eine Erkennung auf Leckage, keine Druckänderung nach der Bedingung (p₁ - p₂) > K₁, ist damit erfüllt. Es wird auf Leckage der entsprechenden Luftfeder erkannt und ein nicht gezeigter radspezifischer Zähler Zᵣ inkrementiert. Auf Leckagefehler wird erkannt, wenn der radspezifische Zähler Zᵣ einen Schwellwert, z.B. den Wert zwei, überschreitet. Der Leckagefehler kann optisch und/oder akustisch im Fahrzeug angezeigt werden und wird parallel in einem permanenten Speicher des Steuergerätes (SG) für Wartungszwecke abgelegt.

Zum Zeitpunkt t₂ erkennt das Steuergerät (SG) das Unterschreiten des Schwellwertes h_{Su} an der entsprechenden Luftfeder und leitet einen Aufregelvorgang der Luftfeder bis zur Sollniveauhöhe h_{S} ein. Der Luftdruck p(t) in der entsprechenden Luftfeder ändert sich in diesem Zeitraum nicht, da keine Laständerung an dem Fahrzeug bzw. der Luftfeder vorgenommen wurde. Nach dem Erreichen der Sollniveauhöhe h_{S} wird das Steuergerät (SG) von dem aktiven Zustand (aktiv) in den sleep-Modus (sleep) versetzt.

Nach einer nicht gezeigten vorgegebenen Zeitspanne kann das Steuergerät (SG) automatisch von dem Zustand 'sleep' in den Zustand 'aktiv' versetzt werden. Danach wird die zum Zeitpunkt t₂ dargestellte Prozedur, Istniveauhöhe h(t) gegebenenfalls Druck p(t) ermitteln und mit den Messergebnissen des vorherigen Zeitpunktes (alter Zeitpunkt t₂) vergleichen, ablaufen. Bei einer erneuten Unterschreitung des Schwellwertes h_{Su} durch die Istniveauhöhe h(t) und der Erfüllung der Druckbedingung (p₁ - p₂) > K₁ wird der radspezifische Zähler Zᵣ erneut inkrementiert werden. Wird der Schwellwert h_{Su} zu dem neuen Zeitpunkt t₂ nicht unterschritten, dann wird kein Druck p₂ ermittelt und der radspezifische Zähler Zᵣ wird bis mininmal auf den Wert Null dekrementiert.

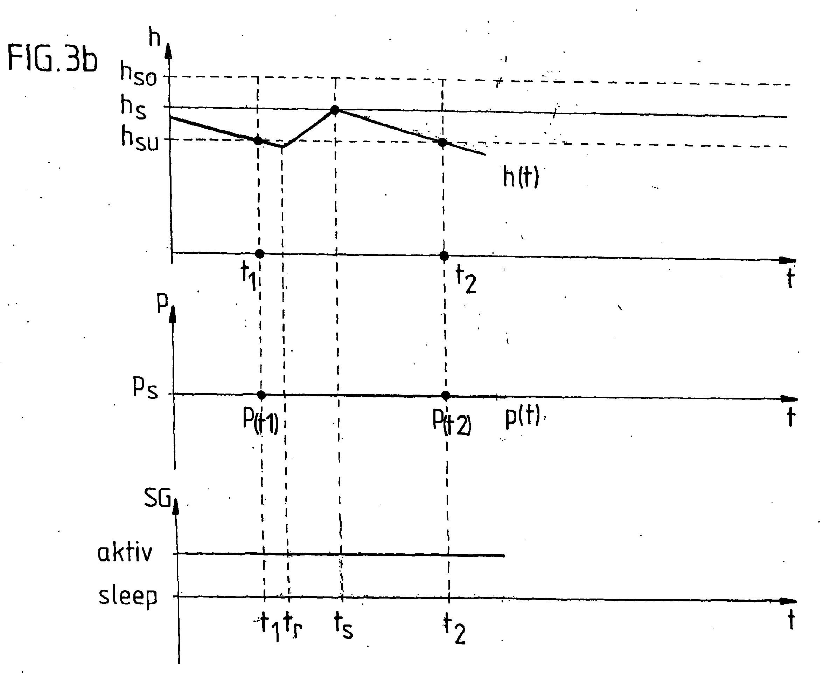

Die Figur 3b zeigt einen anderen zeitlichen Ablauf des Höhen- (h(t)) und Drucksignals (p(t)) einer Luftfeder und des Zustandes des Steuergerätes (SG) als die Figur 3a. Das Steuergerät (SG) in Figur 3b ist immer aktiv und wechselt seinen Zustand innerhalb des Zeitverlaufes nicht. Es ist aber auch möglich, dass sich das Steuergerät (SG) vor, zwischen und nach den angegebenen Zeitpunkten t₁, tᵣ, t_{S} und t_{S} im sleep-Modus befindet. Der Druck p(t) verändert sich ebenfalls über den gesamten dargestellten Zeitraum nicht und entspricht dem Solldruck p_{S}. Die Istniveauhöhe h₁ unterschreitet oder erreicht zum Zeitpunkt t₁ den Schwellwert h_{Su}. Auf Leckage kann nicht erkannt werden, da kein vorheriger Zeitpunkt zum Vergleich der Höhen- und Drucksignale vorhanden ist. Zum Zeitpunkt t₁ wird aber ein Regelbedarf der Luftfeder erkannt. Ein Aufregelvorgang der Luftfeder wird zum Zeitpunkt tᵣ gestartet und zum Zeitpunkt t_{S} beendet, wenn die Istniveauhöhe hᵣ der Sollniveauhöhe h_{S} entspricht.

Zu einem weiteren und zeitlich späteren Zeitpunkt t₂ erreicht bzw. unterschreitet die Istniveauhöhe h₂ erneut den Schwellwert h_{Su}. Erfolgt dies nach einer vorgegebenen Zeitspanne Δt = t₂-t₁ und die Bedingung 1 mit (p₁ - p₂) > K₁ und die Bedingung 3 mit t₂- t₁ < T_{Grenz} sind erfüllt, dann wird auf Leckage erkannt und ein radspezifischer Zähler Zᵣ wird inkrementiert. Oder aber es wird nach einer vorgegebenen Zeitspanne, beispielsweise t₂+(tᵣ-t₁), die Istniveauhöhe ermittelt, ohne einen Aufregel vorgang an der Luftfeder durchzuführen. Die Istniveauhöhe h₂ an der Luftfeder zum Zeitpunkt t₂+(tᵣ-t₁) gegenüber der Istniveauhöhe h₁ zum Zeitpunkt t₁ hat sich so verändert, so dass der Schwellwert K₂ überschritten wird. Es wird auf Leckage an der Luftfeder erkannt und der radspezifische Zähler Zᵣ wird inkrementiert.

Wird mehrfach auf Leckage an einer Luftfeder erkannt und erreicht oder überschreitet der radspezifische Zähler Zᵣ einen vorgegebenen Schwellwert K₄, dann wird auf Leckagefehler erkannt. Der Leckagefehler wird optisch und/oder akustisch im Fahrzeug angezeigt und kann in einem Fehlerspeicher des Steuergerätes (SG) abgespeichert werden. Die Leckage kann auch direkt als Leckagefehler der entsprechenden Luftfeder im Fahrzeug akustisch und/oder optisch angezeigt werden. Oder es wird ein Aufregelvorgang an der entsprechenden Luftfeder bis zur Sollniveauhöhe hs durchgeführt. Wird ein Aufregelvorgang nach dem Zeitpunkt t₂ durchgeführt, dann beginnt der zum Zeitpunkt t₂ dargestellte Ablauf erneut bei einem unterschreiten des Schwellwertes h_{Su}.

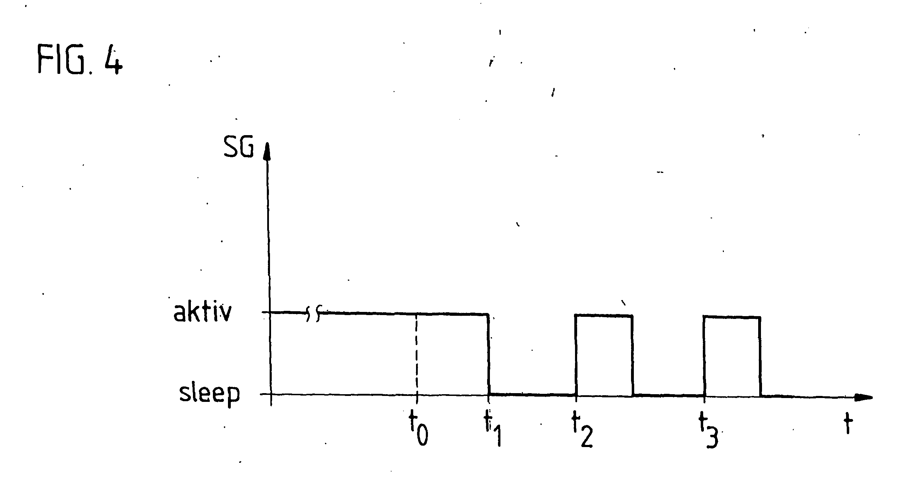

Die Figur 4 zeigt den zeitlichen Ablauf der Zustände 'aktiv' und 'sleep' in dem Steuergerät (SG). Zu einem Zeitpunkt t₀ wird die Zündung (K15) abgeschaltet, wobei das Steuergerät erst nach einer Nachlaufphase t₁-t₀ von dem Zustand 'aktiv' in den Zustand 'sleep' versetzt wird. Nach einer vorgegebenen Zeitspanne t₂-t₁ zum Zeitpunkt t₂ wird das Steuergerät automatisch von dem Zustand 'sleep' in den Zustand 'aktiv'versetzt. Es beginnt eine Nachlaufphase in welcher die Istniveauhöhe der Luftfedern sowie der Druck in den einzelnen Luftfedern ermittelt wird. Werden die Bedingungen für den Druck und das Höhenniveau erfüllt, so dass die Schwellwerte K₁ und K₂ erreicht oder überschritten werden, dann wird auf Leckage an der entsprechenden Luftfeder erkannt. Es wird ein Aufregelvorgang an der entsprechenden Luftfeder durchgeführt. Bei Überschreitung des radspezifischen Zählers Zᵣ wird auf Leckagefehler erkannt, welcher dem Fahrzeugführer angezeigt wird. Nach dem Aufregelvorgang oder nachdem nicht auf Leckage erkannt wurde (K₁ und K₂ nicht erreicht oder überschritten), wird das Steuergerät (SG) automatisch von dem Zustand 'aktiv' in den Zustand 'sleep' versetzt.

Nach einer fest vorgegebenen Zeitspanne t₃-t₂, welche nicht der Zeitspanne t₂-t₁ entsprechen muss, wird das Steuergerät (SG) erneut von dem Zustand 'sleep' in den Zustand 'aktiv' versetzt. Die Überprüfung der Leckage nach oben beschriebenem Schema wird erneut durchgeführt. Der Vorgang des automatischen "Aufwachens" des Steuergerätes (SG) von dem Zustand 'sleep' in den Zustand 'aktiv' kann sich nach fest vorgegebenen Zeitspannen beliebig oft wiederholen.

### Bezugszeichenliste

- 2: (Kraftfahrzeug-)Luftfederanordnung
- 4; 4a, 4b, 4c, 4d: Luftfeder(n)
- 6: Kompressor
- 8: Druckleitung, Stammleitung
- 10a, 10b, 10c, 10d: Quersperrventil(e), Luftfeder-Ventil(e)
- 12: Druckspeicherventil
- 14: Luftspeicher, Druckspeicher
- 16: Drucksensor
- 18: Ablassventil
- 20: Kompressor-Relais
- 22a, 22b, 22c, 22d: Höhensensor(en)
- 24: elektronisches Steuergerät
- 26: Zündung "KL15"

- h: Höhensignal
- h_{S}: Sollniveauhöhe
- h_{So}: oberer Schwellwert (Höhenniveau)
- h_{Su}: unterer Schwellwert (Höhenniveau)
- p: Drucksignal
- p_{S}: Solldruck
- SG: Steuergerät
- t: Zeit
- t₀, t₁, t₂, t₃, tᵣ, t_{S}: Zeitpunkt
- Δt: Zeitspanne

## Patentansprüche

1. Verfahren zur Erkennung von Leckagen in einer Kraftahrzeug-Luftfederanordnung (2) mit einer Niveauregeleinrichtung,
wobei ein elektronisches Steuergerät (24) die von den einzelnen Luftfedern (4a, ...) zugeordneten Höhensensoren (22a, ...) und mindestens einem Drucksensor (16) empfangenen Signale zwecks Steuerung der Luftfeder-Ventile (10a, ...) und eines Kompressors (6) zur Auf- bzw. Abregelung des Fahrzeugs verarbeitet,
**dadurch gekennzeichnet,**
- **dass** zu einem ersten Zeitpunkt t₁ die Höhen-Abstandswerte h₁ der entsprechenden Luftfedern (4) und die zugehörigen die Luftdrücke p₁ gemessen und mit der Zeitangabe abgespeichert werden, wobei der Zeitpunkt t₁ so gewählt wird, dass entweder das Steuergerät (24) von einem aktiven Zustand in einen Sleep-Modus versetzt wird oder der zugehörige Höhen-Abstandswert h₁ einen Schwellwert h_{Su} unterschreitet; und
- **dass** zu einem zweiten Zeitpunkt t₂ die Höhen-Abstandswerte h₂ und bei Bedarf die Luftdrücke p₂ in den entsprechenden Luftfedern (4) gemessen werden, wobei der Zeitpunkt t₂ so gewählt wird, dass entweder eine vorgegeben Zeitspanne Δt gegenüber dem Zeitpunkt t₁ verstrichen ist und/oder der zugehörige Höhen-Abstandswert h₂ einen Schwellwert h_{Su} unterschritten hat (Regelbedarf erkannt), und
- **dass** auf eine Leckage der entsprechenden Luftfeder (4) erkannt wird, wenn zwischen dem ersten Zeitpunkt t₁ und dem zweiten Zeitpunkt t₂ keine Sollniveauveränderung h_{S} erfolgt ist, und an dieser Luftfeder (4) nur eine Druckänderung vom ersten Zeitpunkt t₁ zum zweiten Zeitpunkt t₂ nach der Bedingung (p₁ - p₂) > K₁ und gleichzeitig eine Höhenänderung h₂ nach der Bedingung {h (t₁) - h (t₂)} * K₃/(t₂ - t₁) > K₂ ermittelt worden ist.

2. Verfahren nach Anspruch 1, **dadurch gekennzeichnet, dass**
zur Erkennung einer Leckage diejenige Luftfeder (4) herangezogen wird, die "am tiefsten steht", also den kleinsten Höhen-Abstandswert h₂ nach der Bedingung Min(K_{2,VL}, K_{2,VR}, K_{2,HL}, K_{2,HR}) aufweist.

3. Verfahren nach Anspruch 2, **dadurch gekennzeichnet, dass**
für mindestens eine Luftfeder (4) ein radspezifischer Zähler Zᵣ inkrementiert wird, wenn auf Leckage der entsprechenden Luftfeder (4) erkannt wird.

4. Verfahren nach Anspruch 3, **dadurch gekennzeichnet, dass**
auf einen Leckagefehler einer Luftfeder (4) erkannt wird, wenn ein radspezifischer Zähler Zᵣ einen Schwellwert K₄ überschreitet, welcher der entsprechenden Luftfeder (4) zugeordnet wird.

5. Verfahren nach einem der Ansprüche 3 oder 4, **dadurch gekennzeichnet, dass**
der oder die radspezifische(n) Zähler Zᵣ (VL, VR, HL, HR) der entsprechenden Luftfeder (4) nach einer vorgegebenen Zeitspanne dekrementiert werden, wenn die Ventile (10) zu den entsprechenden Luftfedern (4) innerhalb der vorgegebenen Zeitspanne nicht betätigt wurden und/oder die Höhen-Abstandswerte h₂ der entsprechenden Luftfedern (4) den Schwellwert h_{Su} innerhalb der vorgegebenen Zeitspanne nicht unterschritten haben.

6. Verfahren nach einem der Ansprüche 1 bis 5, **dadurch gekennzeichnet,**
- **dass** der Zeitpunkt t₁ gewählt wird, wenn das elektronische Steuergerät (24) von dem aktiven Zustand in den Sleep-Modus versetzt wird, und
- **dass** der Zeitpunkt t₂ nach einer vorgegebenen Zeitspanne Δt = t₂ - t₁ gewählt wird, und
- **dass** das Steuergerät (24) zum Zeitpunkt t₂ aus dem Sleep-Modus in den Arbeitsmodus versetzt wird (aufwacht), und
- **dass** die Leckagerkennung und die Messung der entsprechenden Luftdrücke p₂.(VL, VR, HL, HR) in den Luftfedern (4a, 4b, 4c, 4d) erst nach dem unterschreiten des Schwellwertes h_{Su} an mindestens einer Luftfeder (4) erfolgt.

7. Verfahren nach Anspruch 6, **dadurch gekennzeichnet, dass**
nach dem unterschreiten des Schwellwertes h_{Su} an einer Luftfeder (4) ein Aufregelvorgang an der entsprechenden Luftfeder (4) bis zum Sollniveau h_{S} innerhalb der Schwellwerte h_{Su} und h_{So} erfolgt.

8. Verfahren nach Anspruch 1 oder 6, **dadurch gekennzeichnet, dass**
das Steuergerät (24) von dem aktiven Zustand in den Sleep-Modus wechselt, wenn die Zündung des Kraftfahrzeuges ausgeschaltet wird.

9. Verfahren nach Anspruch 7, **dadurch gekennzeichnet, dass**
das Steuergerät (24) nach der Beendigung aller erforderlichen Aufregelvorgänge an den Luftfedern (4) von dem aktiven Zustand in den Sleep-Modus versetzt wird.

10. Verfahren nach Anspruch 6, **dadurch gekennzeichnet, dass**
das Steuergerät (24) von dem aktiven Arbeitsmodus in den Sleep-Modus versetzt wird, wenn nach dem Zeitpunkt t₂ keine Leckageerkennung erfolgt und/oder der Schwellwert h_{Su} an keiner Luftfeder (4) unterschritten worden ist.

11. Verfahren nach einem oder mehreren der vorherigen Ansprüche, **dadurch gekennzeichnet, dass**
die Leckage und/oder der Leckagefehler der entsprechenden Luftfeder(n) (4) oder der Luftfederanordnung (2) insgesamt im Fahrzeug akustisch oder visuell angezeigt werden und/oder eine Leckage und/oder ein Leckagefehler in einem Speicher des Steuergerätes abgespeichert wird.

12. Vorrichtung zur Durchführung des Verfahrens zur Erkennung von Leckagen in einer Kraftfahrzeug-Luftfederanordnung (2) mit einer Niveauregeleinrichtung, gemäß einem der Ansprüche 1 bis 10,
wobei ein elektronisches Steuergerät (24) die von den einzelnen Luftfedern (4a, ...) zugeordneten Höhensensoren (22a, ...) und mindestens einem Drucksensor (16) empfangenen Signale zwecks Steuerung von Luftfederventilen (10a, ...) und eines Kompressors (6) zur Auf- und Abregelung des Fahrzeugs verarbeitet,
**dadurch gekennzeichnet,**
**dass** in dem elektronischen Steuergerät (24) eine Funktionslogik vorgesehen ist, die mit den Höhensensoren (22a, 22b, 22c, 22d) und dem mindestens einen Drucksensor (16) und den Luftfeder-Ventilen (10a, 10b, 10c, 10d) und sonstigen Ventilen (12, 18) und dem Kompressor-Relais (20) derartig in Wirkverbindung steht,
**dass** bei einem vorgegebenen Sollniveau h_{S} zwischen zwei vorgegebenen Zeitpunkten t₁, t₂ und bei Druckänderungen gemäß der Bedingung (p₁ - p₂) > K₁ vom ersten Zeitpunkt t₁ zum zweiten Zeitpunkt t₂ und bei gleichzeitig Höhenniveauänderungen gemäß der Bedingung {h (t₁) - h (t₂)} * K₃/(t₂ - t₁) > K₂ an einer Fahrzeugecke auf eine Leckage der Luftfederanordnung oder der entsprechenden Luftfeder (4) erkannt wird.

13. Vorrichtung nach Anspruch 12, **dadurch gekennzeichnet, dass**
das elektronische Steuergerät (24) einen Zähler Zᵣ mit einem Speichereintrag aufweist.

14. Vorrichtung nach Anspruch 12 oder 13, **dadurch gekennzeichnet, dass**
die Zeitpunkte t₁ und t₂ bei ausgeschalteter Zündung nach 1 bis 2 Stunden gewählt werden.

## Claims

1. Method for detecting leaks in a motor vehicle pneumatic spring arrangement (2) having a ride level control device,
wherein an electronic control unit (24) processes the signals received from the height sensors (22a, ...) assigned to the individual pneumatic springs (4a, ...) and from at least one pressure sensor (16) for the purpose of controlling the pneumatic spring valves (10a, ...) and a compressor (6) for raising or lowering the vehicle, **characterized**
- **in that** at a first time t₁ the vertical distance values h₁ of the corresponding pneumatic springs (4) and the associated air pressures p₁ are measured and stored with the time reference, wherein the time t₁ is selected such that either the control unit (24) is changed from an active state into a sleep mode or the associated vertical distance value h₁ drops below a threshold value h_{Su}, and
- **in that** at a second time t₂ the vertical distance values h₂, and when necessary the air pressures p₂ in the corresponding pneumatic springs (4), are measured, wherein the time t₂ is selected such that either a predefined time period Δt with respect to the time t₁ has passed and/or the associated vertical distance value h₂ has dropped below a threshold value h_{Su} (need for control detected), and
- **in that** a leak in the corresponding pneumatic spring (4) is detected if a setpoint ride level change h_{S} has not taken place between the first time t₁ and the second time t₂, and only a change in pressure from the first time t₁ to the second time t₂ according to the condition (p₁-p₂)>K₁ has taken place and at the same time a change h₂ in height according to the equation {h(t₁)-h(t₂)}*K₃/(t₂-t₁)>K₂ has been determined.

2. Method according to Claim 1, **characterized in that** in order to detect a leak the pneumatic spring (4) which is "lowest", that is to say which has the smallest vertical distance value h₂ according to the condition Min(K_{2,VL,} K_{2,VR,} K₂,_{HL}, K_{2,HR}), is used.

3. Method according to Claim 2, **characterized in that** a wheel-specific counter Zᵣ is incremented for at least one pneumatic spring (4) if a leak in the corresponding pneumatic spring (4) is detected.

4. Method according to Claim 3, **characterized in that** a leakage fault in a pneumatic spring (4) is detected if a wheel-specific counter Zᵣ exceeds a threshold value K₄ which is assigned to the corresponding pneumatic spring (4).

5. Method according to one of Claims 3 or 4, **characterized in that** the wheel specific counter or counters Zᵣ (VL, VR, HL, HR) of the corresponding pneumatic spring (4) are decremented after a prescribed time period if the valves (10) for the corresponding pneumatic springs (4) have not been activated within the prescribed time period and/or the vertical distance values h₂ of the corresponding pneumatic springs (4) have not dropped below the threshold value h_{Su} within the predefined time period.

6. Method according to one of Claims 1 to 5, **characterized**
- **in that** the time t₁ is selected if the electronic control unit (24) is changed from the active state into the sleep mode, and
- **in that** the time t₂ is selected after a predefined time period Δt=t₂-t₁, and
- **in that** the control unit (24) is changed from the sleep mode into the working mode (woken up) at the time t₂, and
- **in that** the detection of leaks and the measurement of the corresponding air pressures p₂ (VL, VR, HL, HR) in the pneumatic springs (4a, 4b, 4c, 4d) does not take place until after the value at at least one pneumatic spring (4) has dropped below the threshold value h_{Su}.

7. Method according to Claim 6, **characterized in that** after the value has dropped below the threshold value h_{Su} at one pneumatic spring (4) a raising process at the corresponding pneumatic spring (4) takes place up to the setpoint ride level h_{S} within the threshold values h_{Su} and h_{So}.

8. Method according to Claim 1 or 6, **characterized in that** the control unit (24) changes from the active state into the sleep mode if the ignition of the motor vehicle is switched off.

9. Method according to Claim 7, **characterized in that** the control unit (24) is changed from the active state into the sleep mode after all the necessary raising processes at the pneumatic springs (4) have ended.

10. Method according to Claim 6, **characterized in that** the control unit (24) is changed from the active working mode into the sleep mode if no leaks are detected after the time t₂ and/or the value has not dropped below the threshold value h_{Su} at any pneumatic spring (4).

11. Method according to one of the preceding claims, **characterized in that** the leak and/or the leakage fault of the corresponding pneumatic spring or springs (4) or of the pneumatic spring arrangement (2) are indicated audibly or displayed visually in their entirely in the vehicle and/or a leak and/or a leakage fault are stored in a memory of the control unit.

12. Device for carrying out the method for detecting leaks in a motor vehicle pneumatic spring arrangement (2) having a ride level control device, as claimed in one of Claims 1 to 10, wherein an electronic control unit (24) processes the signals received from the height sensors (22a, ...) assigned to the individual pneumatic springs (4a, ...) and from at least one pressure sensor (16) for the purpose of controlling pneumatic spring valves (10, ...) and a compressor (6) for raising and lowering the vehicle, **characterized in that** a function logic is provided in the electronic control unit (24) and is operatively connected to the height sensors (22a, 22b, 22c, 22d) and the at least one pressure sensor (16) and the pneumatic spring valves (10a, 10b, 10c, 10d) and to other valves (12, 18) and to the compressor relay (20) in such a way that a leak in pneumatic spring arrangement or the corresponding pneumatic spring (4) is detected when there is a predefined setpoint ride level (hₛ) between two predefined times t₁, t₂, and/or when there are changes in pressure according to the condition (p₁-p₂)>K₁ from the first time t₁ to the second time t₂ and when there are simultaneously changes in ride level according to the condition {h(t₁)-h(t₂)}*K₃/(t₂-t₁)>K₂ at a corner of the vehicle.

13. Device according to Claim 12, **characterized in that** the electronic control unit (24) has a counter Zᵣ with a storage input.

14. Device according to Claim 12 or 13, **characterized in that** the times t₁ and t₂ are selected after 1 to 2 hours when the ignition has been switched off.

## Revendications

1. Procédé de détection de fuites dans un dispositif de ressort pneumatique de véhicule automobile (2), comprenant un dispositif de réglage de niveau,
dans lequel un appareil de commande électronique (24) traite les signaux reçus des capteurs de niveau (22a, ...) associés aux ressorts pneumatiques individuels (4a, ...) et d'au moins un capteur de pression (16) pour commander les soupapes des ressorts pneumatiques (10a, ...) et un compresseur (6) pour réguler le véhicule à la marche ou à l'arrêt,
**caractérisé en ce que**
- à un premier moment t₁, les valeurs d'écart de niveau h₁ des ressorts pneumatiques correspondants (4) et les pressions pneumatiques correspondantes p₁ sont mesurées et enregistrées avec l'indication d'heure, le moment t₁ étant choisi de manière à ce que soit l'appareil de commande (24) soit passé d'un état actif à un mode sommeil, soit la valeur d'écart de niveau h₁ correspondante sous-dépasse une valeur seuil h_{Su} et,
- à un deuxième moment t₂, les valeurs d'écart de niveau h₂ et, en cas de besoin, les pressions pneumatiques p₂ sont mesurées dans les ressorts pneumatiques correspondants (4), le moment t₂ étant choisi de manière à ce que une fourchette de temps prédéterminée Δt soit écoulée par rapport au moment t₁ et/ou la valeur d'écart de niveau h₂ correspondante ait sous-dépassé une valeur seuil h_{Su} (besoin de réglage détecté) et
- il est détecté une fuite du ressort pneumatique correspondant (4) si, entre le premier moment t₁ et le deuxième moment t₂, il n'y a pas eu de changement de niveau théorique h_{S} et s'il n'a été déterminé sur ce ressort pneumatique (4) qu'un changement de pression du premier moment t₁ au deuxième moment t₂ d'après la condition (p₁ - p₂) > K₁ et simultanément un changement de niveau h₂ d'après la condition {h(t₁) - h(t₂)} * K₃/ (t₂ - t₁) > K₂.

2. Procédé selon la revendication 1, **caractérisé en ce que**,
pour détecter une fuite, on se sert du ressort pneumatique (4) qui « se trouve le plus bas », donc présente la plus petite valeur d'écart de niveau h₂ d'après la condition Min (K_{2,VL}, K_{2,VR}, K_{2,HL}, K_{2,HR}).

3. Procédé selon la revendication 2, **caractérisé en ce que**,
pour au moins un ressort pneumatique (4), un compteur spécifique à une roue Zᵣ est incrémenté s'il est détecté une fuite du ressort pneumatique correspondant (4).

4. Procédé selon la revendication 3, **caractérisé en ce que**
il est détecté une anomalie de fuite d'un ressort pneumatique (4) si un compteur spécifique à une roue Zᵣ dépasse une valeur seuil K₄ qui est attribuée au ressort pneumatique correspondant (4).

5. Procédé selon l'une quelconque des revendications 3 ou 4, **caractérisé en ce que**
le ou les compteurs spécifiques à une roue Zᵣ (VL, VR, HL, HR) du ressort pneumatique correspondant (4) sont décrémentés après une fourchette de temps prédéterminée si les soupapes (10) des ressorts pneumatiques correspondants (4) n'ont pas été actionnées pendant la fourchette de temps prédéterminée et/ou si les valeurs d'écart de niveau h₂ des ressorts pneumatiques correspondants (4) n'ont pas sous-dépassé la valeur seuil h_{Su} pendant la fourchette de temps prédéterminée.

6. Procédé selon l'une quelconque des revendications 1 à 5, **caractérisé en ce que**
- le moment t₁ est choisi lorsque l'appareil de commande électronique (24) est passé de l'état actif au mode sommeil et que
- le moment t₂ est choisi après une fourchette de temps prédéterminée Δt = t₂ - t₁ et que
- l'appareil de commande (24) est passé au moment t₂ du mode sommeil au mode travail (en veille) et
- que la détection de fuite et la mesure des pressions pneumatiques correspondantes p₂ (VL, VR, HL, HR) dans les ressorts pneumatiques (4a, 4b, 4c, 4d) n'ont lieu qu'après le sous-dépassement de la valeur seuil h_{Su} sur au moins un ressort pneumatique (4).

7. Procédé selon la revendication 6, **caractérisé en ce que**,
après le sous-dépassement de la valeur seuil h_{Su} sur un ressort pneumatique (4), il y a une opération de réglage à la marche sur le ressort pneumatique (4) correspondant jusqu'au niveau théorique hₛ dans le cadre des valeurs seuils h_{Su} et h_{So}.

8. Procédé selon la revendication 1 ou 6, **caractérisé en ce que**
l'appareil de commande (24) passe de l'état actif au mode sommeil lorsque l'allumage du véhicule automobile est désactivé.

9. Procédé selon la revendication 7, **caractérisé en ce que**
l'appareil de commande (24) passe de l'état actif au mode sommeil une fois que toutes les opérations nécessaires de réglage à la marche sur les ressorts pneumatiques (4) sont terminées.

10. Procédé selon la revendication 6, **caractérisé en ce que**
l'appareil de commande (24) passe du mode travail actif au mode sommeil lorsque, après le moment t₂, il n'y pas de détection de fuite et/ou que la valeur seuil h_{Su} n'a été sous-dépassée sur aucun ressort pneumatique (4).

11. Procédé selon l'une quelconque ou plusieurs des revendications précédentes, **caractérisé en ce que**
la fuite et/ou l'anomalie de fuite du ou des ressorts pneumatiques correspondants (4) ou du dispositif de ressort pneumatique (2) sont signalées globalement de manière acoustique ou visuelle dans le véhicule et/ou qu'une fuite et/ou une anomalie de fuite sont enregistrées dans une mémoire de l'appareil de commande.

12. Dispositif de réalisation du procédé de détection de fuites dans un dispositif de ressort pneumatique (2) de véhicule automobile, comprenant un dispositif de réglage de niveau selon l'une quelconque des revendications 1 à 10,
un appareil de commande électronique (24) traitant les signaux reçus des capteurs de niveau (22a, ...) associés aux ressorts pneumatiques individuels (4a, ...) et d'au moins un capteur de pression (16) pour commander les soupapes des ressorts pneumatiques (10a, ...) et un compresseur (6) pour réguler le véhicule à la marche ou à l'arrêt,
**caractérisé en ce que**,
dans l'appareil de commande électronique (24), il est prévu une logique fonctionnelle qui est en liaison fonctionnelle avec les capteurs de niveau (22a, 22b, 22c, 22d) et l'au moins un capteur de pression (16) et les soupapes des ressorts pneumatiques (10a, 10b, 10c, 10d) et d'autres soupapes (12, 18) et le relais de compresseur (20) de manière à ce que,
dans le cas d'un niveau théorique prédéterminé h_{S} entre deux moments prédéterminés t₁, t₂ et de changements de pression d'après la condition (p₁ - p₂) > K₁, du premier moment t₁ au deuxième moment t₂ et simultanément de changements de niveau d'après la condition {h(t₁) - h(t₂) } * K₃/(t₂ - t₁) > K₂ à un coin du véhicule, il est détecté une fuite du dispositif de ressort pneumatique ou du ressort pneumatique correspondant (4).

13. Dispositif selon la revendication 12, **caractérisé en ce que**
l'appareil de commande électronique (24) comporte un compteur Zᵣ avec un enregistrement en mémoire.

14. Dispositif selon la revendication 12 ou 13,
**caractérisé en ce que**
les moments t₁ et t₂ sont choisis une fois que l'allumage est désactivé au bout de 1 à 2 heures.
